# EUROPEAN PATENT SPECIFICATION

(11) **EP 4 462 597 B1**
(45) Date of publication and mention of the grant of the patent: **28.05.2025**
(21) Application number: 24171036.7
(22) Date of filing: 18.04.2024
(51) Int. Cl.: H01Q 3/24, H01Q 9/18, H01Q 21/20, H01Q 21/29, G01S 3/04

(54) **DIRECTION FINDING SYSTEM AND ANTENNA ARRAY**
RICHTUNGSFINDUNGSSYSTEM UND GRUPPENANTENNE
SYSTÈME DE RADIOGONIOMÉTRIE ET RÉSEAU D'ANTENNES

(30) Priority: 08.05.2023 NL 2034779
(43) Date of publication of application: 13.11.2024
(73) Proprietor: Alaris Antennas (Pty) Ltd, Centurion 0157 (ZA)
(72) Inventor: VALE, Christopher Alfred Wolfgang, 2145 Germiston (ZA)
(74) Representative: Maiwald GmbH

(56) References cited:
- EP-A1- 3 982 484
- GB-A- 2 261 997
- US-B1- 6 211 846

## Description

### INTRODUCTION AND BACKGROUND

This invention relates to antenna arrays and more particularly to antenna arrays for direction finding systems.

Direction finding (DF) antenna arrays are known. One such a known DF array is a so-called differentially fed loop array. This array comprises two differentially fed loop antennas collocated, but rotated 90 degrees with respect to each other. Each of these loops are fed at their respective left and right corners, on the same horizontal plane and with opposite polarity or out of phase, i.e. with signals that are reverse polarity to each other.

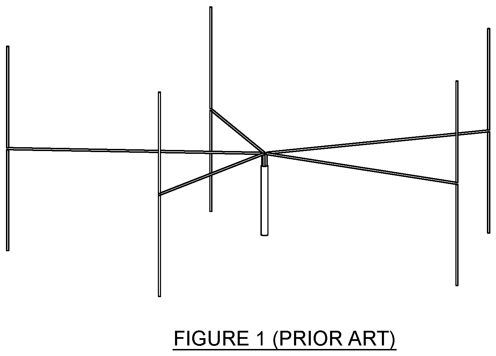

Another known DF array is a dipole antenna array which is shown in figure 1 hereof and which comprises five dipole elements, each comprising a respective centre feed-point, and which are arranged parallel to one another at the five corners of a pentagon. It has been found that the low-frequency DF sensitivity and cross-polarisation isolation of these arrays are not satisfactory for at least some applications. It is known that in low frequency applications, DF antenna arrays often suffer from significant coupling to a mounting structure or other nearby conductive structures. The coupling to these structures will typically have a significant impact on the ability of the DF array to accurately determine the direction of arrival of incoming signals. Low frequency, in this context, refers specifically to those frequencies where the individual elements making up the array can be considered to be electrically small compared to the wavelength of an incoming signal that is to be received. US 6 211 846 B1 discloses a direction finding antenna system comprising a plurality of dipoles.

### OBJECT OF THE INVENTION

Accordingly, it is an object of the present invention to provide a direction finding antenna array with which the applicant believes the aforementioned disadvantages may at least be alleviated or which may provide a useful alternative for the known DF antenna arrays.

### SUMMARY OF THE INVENTION

According to the invention there is provided a direction finding antenna array according to independent claim 1.

The first end of the first antenna element is connected by the first and second electrical connections to the first end of adjacent second and third dipole elements respectively in the array and the second end of the first dipole element is connected by the third and fourth electrical connections to the second end of the adjacent second and third dipole elements respective.

The antenna array may comprise n dipole elements, wherein n ≥ 3. In some embodiments n = 5 and in other embodiments n > 5, including, but not limited to n = 9.

In one embodiment, the antenna array may further comprise at least fourth dipole antenna element and a fifth dipole antenna element, each comprising respective first ends, respective second ends and a respective feed-point, wherein the first, second, third, fourth and fifth linear dipole elements are arranged in spaced relationship relative to one another, wherein the first end of the fourth dipole element is connected by fifth and sixth electrical connections to respectively the first ends of the third and fifth dipole elements and wherein the second end of the fourth dipole element is connected by seventh and eighth electrical connections to respectively the second ends of the third and fifth dipole elements, wherein the first end of the fifth dipole element is connected to the first end of the second dipole element by a ninth electrical connection and wherein the second end of the fifth dipole element is connected to the second end of the second dipole element by a tenth electrical connection.

The first to fifth dipole elements may be located at respective corners of a pentagon.

Each of the dipole elements may be linear in configuration.

The linear dipole elements may be arranged vertically and parallel to one another.

Each electrical connection may comprise an elongate conductor.

In some embodiments, at least some electrical connections may comprise a filter circuit.

The respective feed-points may located in a common plane.

Also included within the scope of the invention is a direction finding system comprising a direction finding antenna array as defined above and wherein the respective feed points are connected to respective inputs of coherent receivers of a receiver arrangement.

The receiver arrangement may comprise a processor for executing a computer program comprising correlative direction-finding algorithms.

### BRIEF DESCRIPTION OF THE ACCOMPANYING DIAGRAMS

The invention will now further be described, by way of example only, with reference to the accompanying diagrams wherein:
- figure 1: is a diagrammatic representation of a prior art multiple dipole DF antenna array;
- figure 2: is a diagrammatic representation of an example embodiment of a direction finding (DF) antenna array according to the invention;
- figure 3: is a comparative graph of DF sensitivity v frequency for the DF antenna array in figure 2 and for the prior art multiple dipole DF antenna array in figure 1;
- figure 4: is a comparative graph of normalized cross-polarization isolation v frequency of the DF antenna array in figure 2 and for the prior art multiple dipole DF antenna array in figure 1; and
- figure 5: is a comparative graph of DF accuracy of the DF antenna array in figure 2 and for the prior art multiple dipole DF antenna array in figure 1.

### DESCRIPTION OF A PREFERRED EMBODIMENT OF THE INVENTION

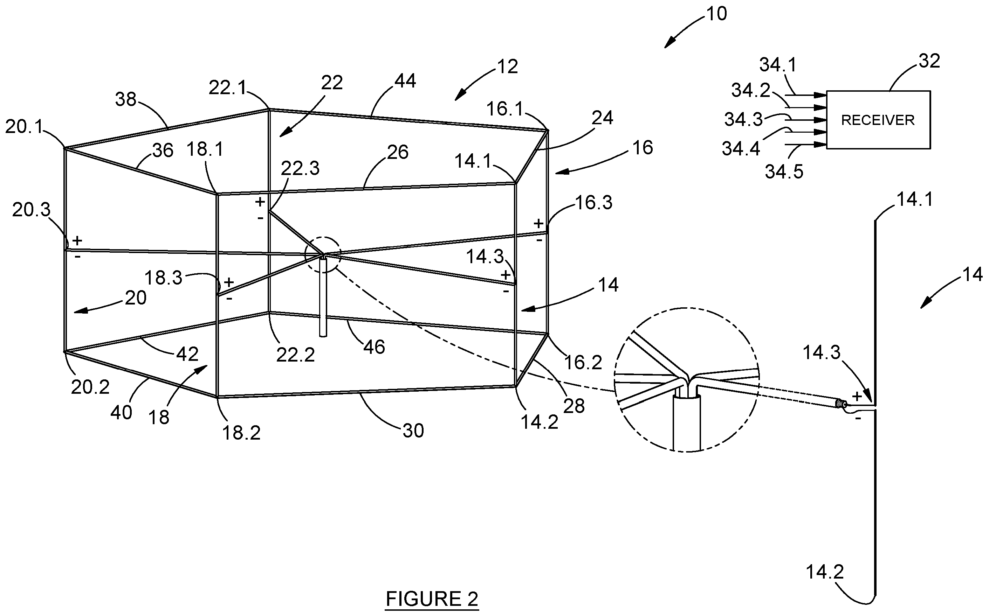

An example embodiment of a direction finding (DF) system 10 and an antenna array 12 therefor are shown in figure 2.

The DF system 10 comprises the DF antenna array 12 connected to a receiver arrangement 32. The DF antenna array comprises at least a first dipole antenna element 14, a second dipole antenna element 16 and a third dipole antenna element 18. The dipole elements comprise respective first ends 14.1, 16.1, 18.1, respective second ends 14.2, 16.2, 18.2 and a respective feed-point 14.3, 16.3, 18.3. The first, second and third dipole elements are arranged in spaced relationship relative to one another in a non-linear pattern. In respect of each dipole element in the array (and taking dipole element 14 as an example), the first end 14.1 is connected by first and second electrical connections 24, 26 to the first end of each of two adjacent dipole elements 16, 18 in the array and the second end 14.2 is connected by third and fourth electrical connections 28, 30 to the second end of each of the two adjacent dipole elements 16, 18.

The receiver arrangement 32 comprises at least three receivers having respective inputs 34.1, 34.2, 34.3 which are respectively connectable to the feed-points 14.3, 16.3, 18.3, respectively.

In a preferred example embodiment as shown in figure 2, the antenna array 12 further comprises a fourth dipole antenna element 20 and a fifth dipole antenna element 22. The dipole elements comprise respective first ends 20.1, 22.1, respective second ends 20.2, 22.2 and a respective feed-point 20.3, 22.3. The first, second, third, fourth and fifth dipole elements are arranged in spaced relationship relative to one another. The first end 20.1 of the fourth dipole element 20 is connected by fifth and sixth electrical connections 36, 38 to respectively the first ends 18.1, 22.1 of the third and fifth dipole elements. The second end 20.2 of the fourth dipole element 20 is connected by seventh and eighth electrical connections 40, 42 to respectively the second ends 18.2, 22.2 of the third and fifth dipole elements. The first end 22.1 of the fifth dipole element 22 is connected to the first end 16.1 of the second dipole element 16 by a ninth electrical connection 44 and the second end 22.2 of the fifth dipole element 22 is connected to the second end 16.2 of the second dipole element 16 by a tenth electrical connection 46.

In this preferred embodiment, the receiver arrangement 32 further comprises fourth and fifth receivers with respective inputs 34.4, 34.5 which are respectively connected to the respective feed-points 20.3, 22.3.

The dipole element need not be, but preferably are linear in configuration.

As shown in figure 2, the first to fifth linear dipole elements 12, 14, 16, 18, 20 and 22 are located at respective corners of a pentagon. The first to fifth dipole elements are arranged vertically and parallel to one another. First parts of each linear dipole element extend from the respective feed-point upwardly to terminate at the first ends and second parts extend from the respective feed-point downwardly to terminate at the second end.

Each of the first to tenth electrical connections 24, 26, 28, 20, 36, 38, 40, 42, 44 and 46 comprises a linear elongate conductor. In other embodiments, at least some of the elongate electrical connections may comprise a filter circuit.

The respective feed-points 14.3, 16.3, 18.3, 20.3, 22.3 are located in a common plane.

There is hence provided a closed structure comprising the vertically extending linear dipole elements 12, 14, 16, 18, 20 and 22 and the horizontally extending elongate electrical connections 24, 26, 28, 20, 36, 38, 40, 42, 44 and 46 between the ends of adjacent linear dipole elements. The resulting loop-like elements (such as the loop-like element formed by linear dipole element 14, elongate electrical connection 26, linear dipole element 18, and elongate electrical connection 30) in the structure is not a pure loop construction, in the sense that it will not work as a single loop element. The arrangement has, as a necessary feature, connections of a loop-like element to its neighbouring loop-like elements to form a closed structure 12 consisting of many (in this example embodiment five (5)) of these loop-like elements. This structure is clearly distinguishable from other loop structures such as a differentially fed loop, and other traditional loop designs which are always used as stand-alone elements.

The receiver arrangement 32 may comprise a processor (not shown) and the processor may execute a computer program comprising correlative direction-finding algorithms. All the feed points 14.3 to 22.3 of the array 12 are directly connected to respective coherent receivers of the arrangement 32 and allow for multiple combinations to be generated in software (after digitization). In contrast, differentially fed loops impose a fixed 180 degree phase shift which is then combined into a single feed point into a receiver.

The fact that each of the feed points 14.3 to 22.3 are connected to a respective coherent receiver is of particular importance, since the physical/galvanic connection between the linear dipole elements allows for multiple feed points along the array to act as pairs that create unique and information rich sources. For example, adjacent feed points 14.3 and 16.3 create a small loop that will have a significantly different radiation pattern when combined, compared to feed points 14.3 and 18.3, which create a much larger loop-like structure compared to the combined feed points 14.3 and 16.3. In both cases, the resulting radiation pattern, and consequently the nature of the information available to the DF algorithm, is fundamentally different from those of either a traditional loop or dipole array.

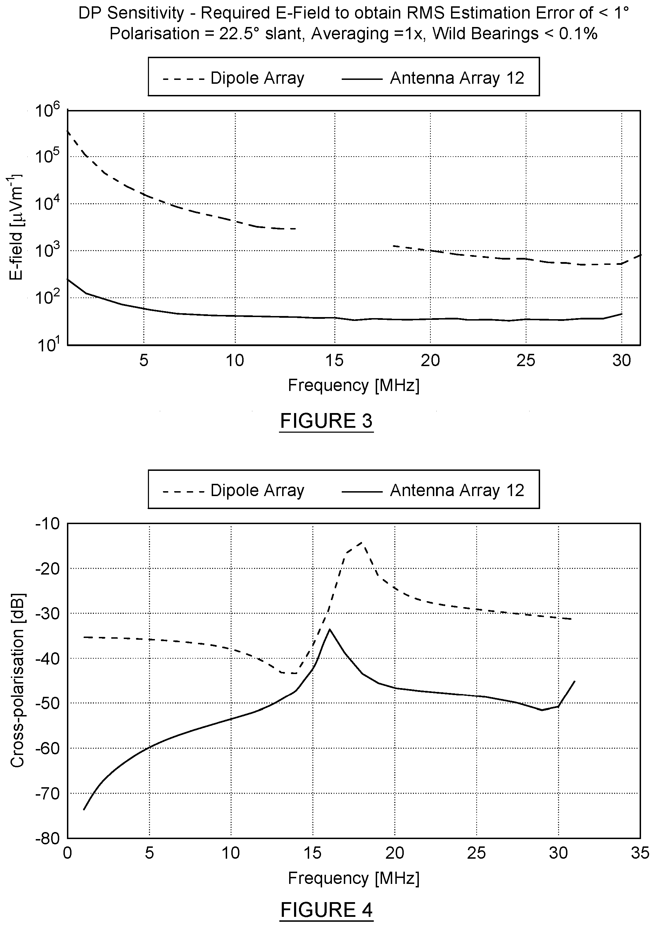

Although the electrical inter-connection of neighbouring dipole elements in DF dipole arrays is generally considered by those skilled in the art to be detrimental to the overall performance of the array, it has been found by the applicant, surprisingly so, that the low-frequency performance, more particularly the low-frequency DF sensitivity, the cross-polarisation isolation and susceptibility to coupling to conductive array mounting structures of the antenna array 12 is substantially better than that of the prior art dipole array in figure 1. This unexpected improved performance is graphically illustrated by the simulated results in figure 3, where the sensitivity of the prior art dipole array of figure 1 is shown in broken lines and the sensitivity of the array 12 is shown in solid lines. The improvement at frequencies smaller than 100 MHz is self-evident. In the simulation an array 12 with dipole elements of 500 mm in length (which is λ/20 at 30 MHz) and an array diameter of 1200 mm were used.

The simulated results in figure 4 exhibit an unexpected improvement in cross-polarisation isolation of roughly 10 dB of the antenna array 12 over that of the conventional dipole array for frequencies below 10 MHz, where the isolation of the prior art dipole array of figure 1 is shown in broken lines and the isolation of the array 12 is shown in solid lines.

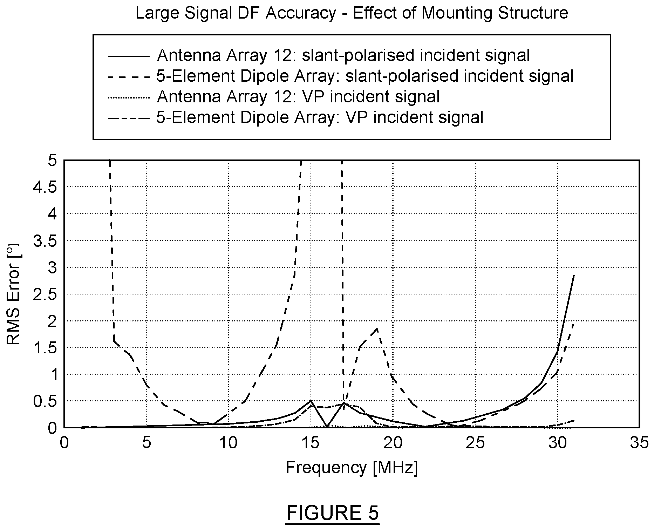

The antenna array 12 exhibits superior immunity to central mounting structures compared to that of conventional dipole arrays, as can be seen from the simulated results in figure 5 below. Note that the DF accuracy of the array 12 stays below 0.5 deg for both vertically polarized (VP) and slant-polarised signals, while the prior art dipole array suffers from a fatal breakdown in accuracy when exposed to a slant-polarised signal. This breakdown is caused by the presence of the mounting structure, whereas the array 12 appears to be immune to the presence of the mounting structure.

## Claims

1. A direction finding antenna array (12) comprising at least a first dipole antenna element (14), a second dipole antenna element (16) and a third dipole antenna element (18), each comprising respective first ends (14.1, 16.1, 18.1), respective second ends (14.2, 16.2, 18.2) and a respective feed-point (14.3, 16.3, 18.3), wherein, the at least first, second and third dipole elements are arranged in spaced relationship relative to one another in a non-linear pattern, **characterized in that**, in respect of each dipole element (14, 16, 18) in the array: a) the first end (14.1) is connected by first and second electrical connections (24, 26) to the first end of each of only two adjacent dipole elements (16, 18) respectively in the array and b) the second end (14.2) is connected by third and fourth electrical connections (28, 30) to the second end of each of only the two adjacent dipole elements (16,18) respectively.

2. The antenna array as claimed in claim 1 wherein the first end (14.1) of the first dipole antenna element (14) is connected by the first and second electrical connections (24, 26) to the first end of adjacent second and third dipole elements (16, 18) respectively in the array and the second end (14.2) of the first dipole element (14) is connected by the third and fourth electrical connections (28, 30) to the second end of the adjacent second and third dipole elements (16, 18) respectively.

3. The direction finding antenna array as claimed in claim 2 wherein the antenna array further comprises at least a fourth dipole antenna element (20) and a fifth dipole antenna element (22), each comprising respective first ends (20.1, 22.1), respective second ends (20.2, 22.2) and a respective feed-point (20.3, 22.3), wherein the first, second, third, fourth and fifth dipole elements are arranged in spaced relationship relative to one another, wherein the first end (20.1) of the fourth dipole element (20) is connected by fifth and sixth electrical connections (36, 38) to respectively the first ends (18.1, 22.1) of the third and fifth dipole elements and wherein the second end (20.2) of the fourth dipole element (20) is connected by seventh and eighth electrical connections (40,42) to respectively the second ends (18.2, 22.2) of the third and fifth dipole elements, wherein the first end (22.1) of the fifth dipole element (22) is connected to the first end (16.1) of the second dipole element (16) by a ninth electrical connection (44) and wherein the second end (22.2) of the fifth dipole element (22) is connected to the second end (16.2) of the second dipole element (16) by a tenth electrical connection (46).

4. The direction finding antenna array as claimed in claim 3 wherein the first to fifth dipole elements are located at respective corners of a pentagon.

5. The direction finding antenna array as claimed in any one of claims 1 to 4 wherein the dipole elements are linear in configuration.

6. The direction finding antenna array as claimed in claim 5 wherein the linear dipole elements are arranged vertically and parallel to one another.

7. The direction finding antenna array as claimed in any one of the preceding claims wherein each electrical connection comprises an elongate conductor.

8. The direction finding antenna array as claimed in any one of the preceding claims wherein each electrical connection comprises a filter network.

9. The direction finding antenna array as claimed in any one of the preceding claims wherein the respective feed-points are located in a common plane.

10. A direction finding system comprising a direction finding antenna array as claimed in any one of claims 1 to 9, further comprising a receiver arrangement comprising a plurality of coherent receivers, each comprising an input, and wherein the respective feed points are connected to respective inputs of said coherent receivers of said receiver arrangement.

11. The direction finding system as claimed in claim 10 wherein the receiver arrangement comprises a processor for executing a computer program comprising correlative direction-finding algorithms.

## Patentansprüche

1. Richtungsfindungs-Antennen-Array (12), umfassend mindestens ein erstes Dipolantennenelement (14), ein zweites Dipolantennenelement (16) und ein drittes Dipolantennenelement (18), die jeweils jeweilige erste Enden (14.1, 16.1, 18.1), jeweilige zweite Enden (14.2, 16.2, 18.2) und einen jeweiligen Einspeisungspunkt (14.3, 16.3, 18.3) umfassen, wobei das mindestens erste, zweite und dritte Dipolelement in einer beabstandeten Beziehung relativ zueinander in einem nicht-linearen Muster angeordnet sind,
**dadurch gekennzeichnet, dass**, in Bezug auf jedes Dipolelement (14, 16, 18) in dem Array: a) das erste Ende (14.1) durch eine erste und eine zweite elektrische Verbindung (24, 26) jeweils mit dem ersten Ende jedes von nur zwei benachbarten Dipolelementen (16, 18) in dem Array verbunden ist und b) das zweite Ende (14.2) durch eine dritte und eine vierte elektrische Verbindung (28, 30) jeweils mit dem zweiten Ende jedes von nur den zwei benachbarten Dipolelementen (16, 18) verbunden ist.

2. Antennen-Array nach Anspruch 1, wobei das erste Ende (14.1) des ersten Dipolantennenelements (14) durch die erste und die zweite elektrische Verbindung (24, 26) jeweils mit dem ersten Ende eines benachbarten zweiten und dritten Dipolelements (16, 18) in dem Array verbunden ist und das zweite Ende (14.2) des ersten Dipolelements (14) durch die dritte und die vierte elektrische Verbindung (28, 30) jeweils mit dem zweiten Ende des benachbarten zweiten und dritten Dipolelements (16, 18) verbunden ist.

3. Richtungsfindungs-Antennen-Array nach Anspruch 2, wobei das Antennen-Array des Weiteren mindestens ein viertes Dipolantennenelement (20) und ein fünftes Dipolantennenelement (22) umfasst, von denen jedes jeweilige erste Enden (20.1, 22.1), jeweilige zweite Enden (20.2, 22.2) und einen jeweiligen Einspeisungspunkt (20.3, 22.3) umfasst, wobei das erste, das zweite, das dritte, das vierte und das fünfte Dipolelement in einer beabstandeten Beziehung relativ zueinander angeordnet sind, wobei das erste Ende (20.1) des vierten Dipolelements (20) durch eine fünfte und eine sechste elektrische Verbindung (36, 38) mit jeweils den ersten Enden (18.1, 22.1) des dritten und des fünften Dipolelements verbunden ist und wobei das zweite Ende (20.2) des vierten Dipolelements (20) durch eine siebte und eine achte elektrische Verbindung (40, 42) mit jeweils den zweiten Enden (18.2, 22.2) des dritten und des fünften Dipolelements verbunden ist, wobei das erste Ende (22.1) des fünften Dipolelements (22) mit dem ersten Ende (16.1) des zweiten Dipolelements (16) durch eine neunte elektrische Verbindung (44) verbunden ist und wobei das zweite Ende (22.2) des fünften Dipolelements (22) mit dem zweiten Ende (16.2) des zweiten Dipolelements (16) durch eine zehnte elektrische Verbindung (46) verbunden ist.

4. Richtungsfindungs-Antennen-Array nach Anspruch 3, wobei das erste bis fünfte Dipolelement an jeweiligen Ecken eines Fünfecks angeordnet sind.

5. Richtungsfindungs-Antennen-Array nach einem der Ansprüche 1 bis 4, wobei die Dipolelemente eine lineare Konfiguration aufweisen.

6. Richtungsfindungs-Antennen-Array nach Anspruch 5, wobei die linearen Dipolelemente vertikal und parallel zueinander angeordnet sind.

7. Richtungsfindungs-Antennen-Array nach einem der vorangehenden Ansprüche, wobei jede elektrische Verbindung einen länglichen Leiter umfasst.

8. Richtungsfindungs-Antennen-Array nach einem der vorangehenden Ansprüche, wobei jede elektrische Verbindung ein Filternetzwerk umfasst.

9. Richtungsfindungs-Antennen-Array nach einem der vorangehenden Ansprüche, wobei die jeweiligen Einspeisungspunkte in einer gemeinsamen Ebene liegen.

10. Richtungsfindungssystem, umfassend ein Richtungsfindungs-Antennen-Array nach einem der Ansprüche 1 bis 9, des Weiteren umfassend eine Empfängeranordnung, die mehrere kohärente Empfänger umfasst, wobei jeder einen Eingang umfasst, und wobei die jeweiligen Einspeisungspunkte mit jeweiligen Eingängen der kohärenten Empfänger der Empfängeranordnung verbunden sind.

11. Richtungsfindungssystem nach Anspruch 10, wobei die Empfängeranordnung einen Prozessor umfasst, um ein Computerprogramm auszuführen, das korrelative Richtungsfindungsalgorithmen umfasst.

## Revendications

1. Réseau d'antennes de radiogoniométrie (12) comprenant au moins un premier élément d'antenne dipôle (14), un deuxième élément d'antenne dipôle (16) et un troisième élément d'antenne dipôle (18), chacun comprenant de premières extrémités respectives (14.1, 16.1, 18.1), de secondes extrémités respectives (14.2, 16.2, 18.2) et un point d'alimentation respectif (14.3, 16.3, 18.3), dans lequel les au moins premier, deuxième et troisième éléments dipôles sont disposés de manière espacée les uns par rapport aux autres dans un motif non linéaire,
**caractérisé en ce que**, par rapport à chaque élément dipôle (14, 16, 18) du réseau : a) la première extrémité (14.1) est reliée par de première et deuxième connexions électriques (24, 26) à la première extrémité de chacun de seulement deux éléments dipôles adjacents (16, 18) respectivement dans le réseau et b) la seconde extrémité (14.2) est reliée par de troisième et quatrième connexions électriques (28, 30) à la seconde extrémité de chacun de seulement deux éléments dipôles adjacents (16, 18) respectivement.

2. Réseau d'antennes selon la revendication 1, dans lequel la première extrémité (14.1) du premier élément d'antenne dipôle (14) est reliée par les première et deuxième connexions électriques (24, 26) à la première extrémité de deuxième et troisième éléments dipôles adjacents (16, 18) respectivement dans le réseau, et la seconde extrémité (14.2) du premier élément dipôle (14) est reliée par les troisième et quatrième connexions électriques (28, 30) à la seconde extrémité des deuxième et troisième éléments dipôles adjacents (16, 18) respectivement.

3. Réseau d'antennes de radiogoniométrie selon la revendication 2, dans lequel le réseau d'antennes comprend en outre au moins un quatrième élément d'antenne dipôle (20) et un cinquième élément d'antenne dipôle (22), chacun comprenant de premières extrémités respectives (20.1, 22.1), de secondes extrémités respectives (20.2, 22.2) et un point d'alimentation respectif (20.3, 22.3), dans lequel les premier, deuxième, troisième, quatrième et cinquième éléments dipôles sont disposés de manière espacée les uns des autres, dans lequel la première extrémité (20.1) du quatrième élément dipôle (20) est reliée par de cinquième et sixième connexions électriques (36, 38) respectivement aux premières extrémités (18.1, 22.1) des troisième et cinquième éléments dipôles et dans lequel la seconde extrémité (20.2) du quatrième élément dipôle (20) est reliée par de septième et huitième connexions électriques (40, 42) respectivement aux secondes extrémités (18.2, 22.2) des troisième et cinquième éléments dipôles, dans lequel la première extrémité (22.1) du cinquième élément dipôle (22) est reliée à la première extrémité (16.1) du deuxième élément dipôle (16) par une neuvième connexion électrique (44) et dans lequel la seconde extrémité (22.2) du cinquième élément dipôle (22) est reliée à la seconde extrémité (16.2) du deuxième élément dipôle (16) par une dixième connexion électrique (46).

4. Réseau d'antennes de radiogoniométrie selon la revendication 3, dans lequel les premier à cinquième éléments dipôles sont situés à des coins respectifs d'un pentagone.

5. Réseau d'antennes de radiogoniométrie selon l'une quelconque des revendications 1 à 4, dans lequel les éléments dipôles ont une configuration linéaire.

6. Réseau d'antennes de radiogoniométrie selon la revendication 5, dans lequel les éléments dipôles linéaires sont disposés verticalement et parallèlement les uns aux autres.

7. Réseau d'antennes de radiogoniométrie selon l'une quelconque des revendications précédentes, dans lequel chaque connexion électrique comprend un conducteur allongé.

8. Réseau d'antennes de radiogoniométrie selon l'une quelconque des revendications précédentes, dans lequel chaque connexion électrique comprend un réseau de filtrage.

9. Réseau d'antennes de radiogoniométrie selon l'une quelconque des revendications précédentes, dans lequel les points d'alimentation respectifs sont situés dans un plan commun.

10. Système de radiogoniométrie comprenant un réseau d'antennes de radiogoniométrie selon l'une quelconque des revendications 1 à 9, comprenant en outre un dispositif de réception comprenant une pluralité de récepteurs cohérents, chacun comprenant une entrée, et dans lequel les points d'alimentation respectifs sont connectés à des entrées respectives des récepteurs cohérents dudit dispositif de réception.

11. Système de radiogoniométrie selon la revendication 10, dans lequel le récepteur comprend un processeur pour l'exécution d'un programme informatique comprenant des algorithmes de radiogoniométrie corrélatifs.
